(19)

Europäisches
Patentamt
European
Patent Office
Office européen
des brevets

(11) **EP 3 145 138 A1**

(12) **EUROPEAN PATENT APPLICATION**
published in accordance with Art. 153(4) EPC

(43) Date of publication:
**22.03.2017 Bulletin 2017/12**

(21) Application number: **15810605.4**

(22) Date of filing: **25.05.2015**

(51) Int Cl.:
***H04L 25/02*** *(2006.01)*

(86) International application number:
**PCT/CN2015/079677**

(87) International publication number:
**WO 2015/192704 (23.12.2015 Gazette 2015/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.06.2014 CN 201410269747**

(71) Applicant: **Huawei Technologies Co. Ltd.
Shenzhen, Guangdong 518129 (CN)**

(72) Inventor: **WANG, Hao
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(54) **DATA PROCESSING METHOD AND DEVICE FOR MAXIMUM LIKELIHOOD (ML) RECEIVER**

(57)      A data processing method and apparatus for an ML receiver relates to the field of communications technologies, and can resolve a problem that parameters required by an ML receiver cannot be accurately estimated and an interference cancellation capability of the ML receiver is reduced. The method in the present invention includes: performing, by an ML receiver, channel estimation on a serving cell and an interference cell by using signals received at reference signal locations, to obtain channel estimation matrix; calculating first metrics for received signals and the channel estimation matrix, and determining survivor paths of the serving cell according to the first metrics; calculating second metrics for the received signals and the channel estimation matrix according to the determined survivor paths of the serving cell and all values of an unknown parameter, and determining survivor paths of the interference cell according to the second metrics; determining final survivor paths according to the survivor paths of the interference cell; and calculating an LLR according to the final survivor paths. The present invention is applicable to an ML receiver.

A maximum likelihood ML receiver performs channel estimation on a serving cell and an interference cell by using signals received at reference signal locations, to obtain a channel estimation matrix — 101

The ML receiver calculates first metrics for received signals and the channel estimation matrix, and determines survivor paths of the serving cell according to the first metrics — 102

The ML receiver calculates second metrics for the received signals and the channel estimation matrix according to the determined survivor paths of the serving cell and all values of an unknown parameter, and determines survivor paths of the interference cell according to the second metrics — 103

The ML receiver determines final survivor paths according to the survivor paths of the interference cell — 104

The ML receiver calculates a log-likelihood ratio LLR according to the final survivor paths — 105

FIG. 2

EP 3 145 138 A1

## Description

This application claims priority to Chinese Patent Application No. 201410269747.7, filed with the Chinese Patent Office on June 17, 2014, and entitled "DATA PROCESSING METHOD AND APPARATUS FOR MAXIMUM LIKELIHOOD ML RECEIVER ", which is incorporated herein by reference in its entirety.

## TECHNICAL FIELD

The present invention relates to the field of communications technologies, and in particular, to a data processing method and apparatus for a maximum likelihood ML receiver.

## BACKGROUND

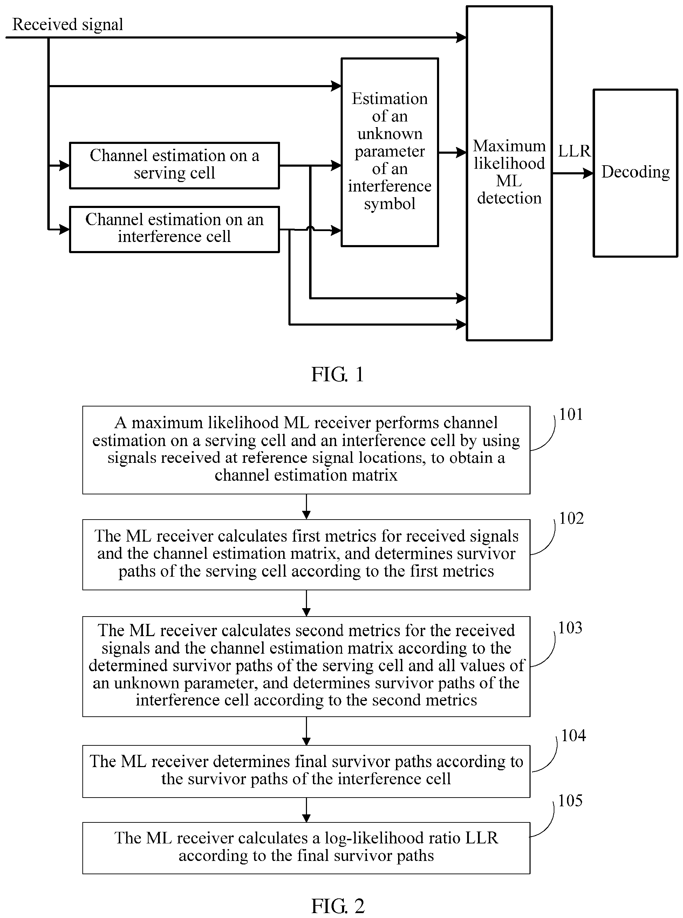

In an LTE scenario, UE (User Equipment, user equipment) may be interfered with by user equipment in a neighbor cell or paired user equipment in a current cell, and the interference severely deteriorates performance of demodulating a data channel by the UE. High density of base stations and heterogeneity are general evolution directions of an LTE network structure, which obviously causes severer inter-cell and multiuser interference of a same frequency. At present, the interference may be rejected by using a receiver for rejecting or canceling multiuser or inter-cell interference, for example, an IRC (Interference Rejection Combining, interference rejection combining) receiver, an MMSE (Minimum Mean Square Error, minimum mean square error) receiver, or an ML (Maximum Likelihood, maximum likelihood) receiver. Interference rejection capabilities of the MMSE receiver and the IRC receiver are limited, and in a scenario that interference is strong at a cell edge, the performance of demodulating a data channel by the UE is still poor. The ML receiver may cancel the inter-cell interference or the multiuser interference, but needs to know some parameters such as a modulation order, a transmission mode, and a PMI (Pre-coder Matrix Indicator, precoding) of an interfering signal. In the prior art, a block diagram of implementing anti-interference by the ML receiver is shown in FIG. 1. In an LTE MIMO-OFDM system, assuming that a quantity of receive antennas on a UE side is N, and x, y, and H are respectively used to represent a transmitted symbol vector, a receive vector, and an equivalent frequency domain channel matrix (including a PMI) of an RE (Resource Element, resource element) in a frequency domain, a channel model may be expressed as $y=Hx+n$, where it is assumed that n is an N-dimensional additive white Gaussian noise vector (where an average value is 0, and a covariance matrix is $\sigma^2 I$); x is an L-dimensional column vector (where L represents a total quantity of layers of transmitted symbols), that is, $x=[x_1, x_2, ..., x_L]^T$; and the channel matrix $H=[h_1, h_2, ..., h_L]$ (where $h_k$ is an N-dimensional column vector, and represents an equivalent frequency domain channel corresponding to the $k^{th}$ transmitted symbol). For an LTE system of multiple cells, x and H may be divided into two parts, that is, $y = H_s x_s + H_a x_a + n$, where a subscript s represents a serving cell, a subscript a represents an interference cell. Generally, it is assumed that transmitted symbols from first B layers are from the serving cell, and transmitted symbols from the $(B+1)^{th}$ layer to the $L^{th}$ layer are from another interference cell (which may be one interference cell, or may be multiple interference cells) or another paired UE in the current cell, that is, $H_s=[h_1, h_2, ..., h_B]$, $H_a=[h_{B+1}, h_{B+2}, ..., h_L]$, $x_s=[x_1, x_2, ..., x_B]^T$, and $x_a=[x_{B+1}, x_{B+2}, ..., x_L]^T$. A process in which the ML receiver obtains some parameters such as a modulation order of interference symbols is: First, the ML receiver performs channel estimation on the serving cell and the interference cell according to received signals; then, an unknown parameter such as the modulation order are estimated by using a classical estimation algorithm such as a clustering or generic maximum log-likelihood algorithm and by means of channel estimation and the received signal; and finally, ML detection and decoding are sequentially performed by using the previous output. An LLR (Log-Likelihood Ratio, log-likelihood ratio), obtained through the ML detection and provided for the decoding, of the $i^{th}$ bit $b_{j,i}$ of symbol from the $j^{th}$ layer may be expressed as:

$$
\begin{aligned}
L\left(b_{j,i}\right) &= \ln \frac{\Pr\left(b_{j,i}=1\big|y\right)}{\Pr\left(b_{j,i}=0\big|y\right)} \\[2mm]
&= \ln \frac{\displaystyle\sum_{\{x\}:b_{j,i}=1} \Pr\left(y\big|x\right)\Pr\left(x\right)}{\displaystyle\sum_{\{x\}:b_{j,i}=0} \Pr\left(y\big|x\right)\Pr\left(x\right)} \qquad (1) \\[2mm]
&\approx \frac{1}{\sigma^2}\left\{\min_{\{x\}:b_{j,i}=1}\left(\left\|y-Hx\right\|^2\right) - \min_{\{x\}:b_{j,i}=0}\left(\left\|y-Hx\right\|^2\right)\right\}
\end{aligned}
$$

where Pr is a probability function, Pr($y|x$) represents a probability of y under a condition x, H is an equivalent channel including information about a transmission mode and a PMI, and a value of x is within an estimated modulation order set, where the modulation order set in LTE includes three types: QPSK (Quadrature Phase Shift Keying, quadrature phase shift keying), 16QAM (16 Quadrature Amplitude Modulation, 16 quadrature amplitude modulation), and 64QAM (64 Quadrature Amplitude Modulation, 64 quadrature amplitude modulation).

The prior art has at least the following problems: An ML receiver needs to estimate the unknown parameter such as the modulation order of an interference symbol first. In an LTE system, a signal-to-noise ratio of the interference symbol is generally not high, and a probability of correctly estimating the unknown parameter is generally relatively low. When the parameter is estimated incorrectly, the ML receiver cannot work normally, which reduces an interference cancellation capability of the ML receiver, and results in a high frame error rate of UE using the ML receiver.

**SUMMARY**

Embodiments of the present invention provide a data processing method and apparatus for a maximum likelihood ML receiver, which can resolve a problem that the unknown parameter required by an ML receiver cannot be accurately estimated and an interference cancellation capability of the ML receiver is reduced.

To achieve the foregoing objective, the following technical solutions are used in the embodiments of the present invention:

According to a first aspect, an embodiment of the present invention provides a data processing method for an ML receiver, including:

performing, by the ML receiver, channel estimation on a serving cell and an interference cell by using signals received at reference signal locations, to obtain channel estimation matrix, where the serving cell is a cell on which the ML receiver camps, the interference cell is a cell interfering with the ML receiver, and the reference signal locations are preset;

calculating, by the ML receiver, first metrics for received signals and the channel estimation matrix, and determining survivor paths of the serving cell according to the first metrics, where the received signals are signals that the ML receiver receives at non-reference signal locations;

calculating, by the ML receiver, second metrics for the received signals and the channel estimation matrix according to the determined survivor paths of the serving cell and all values of an unknown parameter, and determining survivor paths of the interference cell according to the second metrics, where the unknown parameter is a parameter that is unknown when the second metric is calculated;

determining, by the ML receiver, final survivor paths according to the survivor paths of the interference cell; and

calculating, by the ML receiver, a log-likelihood ratio LLR according to the final survivor paths.

With reference to the first aspect, in a first implementation manner of the first aspect, before the determining, by the ML receiver, final survivor paths according to the survivor paths of the interference cell, the method further includes:

estimating, by the ML receiver, value probabilities of the unknown parameter by using the received signals and the channel estimation matrix;

estimating, by the ML receiver, signal-to-noise ratios or noise powers of the received signals; and

calculating, by the ML receiver, prior information of the unknown parameter by using the signal-to-noise ratios or the noise powers and the value probabilities of the unknown parameter; and

the determining, by the ML receiver, final survivor paths according to the survivor paths of the interference cell includes:

determining, by the ML receiver, the final survivor paths according to the prior information and the survivor paths of the interference cell.

With reference to the first implementation manner of the first aspect, in a second implementation manner of the first aspect, before the estimating, by the ML receiver, signal-to-noise ratios or noise powers of the received signals, the method further includes:

classifying, by the ML receiver, levels of the signal-to-noise ratios or the noise powers; and

storing, by the ML receiver, prior information corresponding to the levels, where there is a one-to-one correspondence between the levels and the prior information.

With reference to the second implementation manner of the first aspect, in a third implementation manner of the first aspect, the estimating, by the ML receiver, signal-to-noise ratios or noise powers of the received signals includes:

estimating, by the ML receiver, the levels of the signal-to-noise ratios or the noise powers of the received signals; and the calculating, by the ML receiver, prior information of the unknown parameter by using the signal-to-noise ratios or the noise powers and the value probabilities of the unknown parameter includes:

obtaining, by the ML receiver according to the levels, the prior information corresponding to the levels.

With reference to the first aspect or any one of the implementation manners of the first aspect, in a fourth implementation manner of the first aspect, the calculating, by the ML receiver, second metrics for the received signals and the channel estimation matrix according to the determined survivor paths of the serving cell and all values of an unknown parameter, and determining survivor paths of the interference cell according to the second metrics includes:

calculating, by the ML receiver, the second metrics for the received signals and the channel estimation matrix according to the determined survivor paths of the serving cell and values of the unknown parameter in each of quadrature phase shift keying QPSK, 16 quadrature amplitude modulation 16QAM, and 64 quadrature amplitude modulation 64QAM modulation schemes; and
determining, in each of the QPSK, 16QAM, and 64QAM modulation schemes according to ranking of numerical values of the second metrics, N second metrics whose numerical values are minimum, and determining survivor paths that correspond to the N second metrics whose numerical values are minimum as the survivor paths of the interference cell, where N is an integer greater than 1 and less than a total quantity of the second metrics; or
calculating, by the ML receiver, the second metrics for the received signals and the channel estimation matrix according to the determined survivor paths of the serving cell and values of the unknown parameter in each of the QPSK and 16QAM modulation schemes; and
determining, in each of the QPSK and 16QAM modulation schemes according to ranking of numerical values of the second metrics, N second metrics whose numerical values are minimum, and determining survivor paths that correspond to the N second metrics whose numerical values are minimum as the survivor paths of the interference cell, where N is an integer greater than 1 and less than a total quantity of the second metrics.

With reference to any one of the implementation manners of the first aspect, in a fifth implementation manner of the first aspect, the determining, by the ML receiver, the final survivor paths according to the prior information and the survivor paths of the interference cell includes:

subtracting, by the ML receiver, the prior information of the determined survivor paths of the interference cell from the second metrics corresponding to the determined survivor paths of the interference cell, to obtain differences; ranking, by the ML receiver, numerical values of the differences corresponding to the determined survivor paths of the interference cell, and determining survivor paths of the interference cell that correspond to X differences whose numerical values are minimum, where X is an integer greater than 1 and less than a total quantity of the survivor paths of the interference cell that are determined in all the subsets; and determining the survivor paths of the interference cell that correspond to the X differences whose numerical values are minimum as the final survivor paths.

With reference to the first aspect or the fourth implementation manner of the first aspect, in a sixth implementation manner of the first aspect, the determining, by the ML receiver, final survivor paths according to the survivor paths of the interference cell includes:

ranking, by the ML receiver, the numerical values of the second metrics corresponding to the determined survivor paths of the interference cell, and determining survivor paths of the interference cell that correspond to M second metrics whose numerical values are minimum, where M is an integer greater than 1 and less than a total quantity of the survivor paths of the interference cell that are determined in all the subsets; and determining the survivor paths of the interference cell that correspond to the M second metrics whose numerical values are minimum as the final survivor paths.

According to a second aspect, an embodiment of the present invention provides a data processing apparatus for an ML receiver, including:

an estimation unit, configured to perform channel estimation on a serving cell and an interference cell by using signals received at reference signal locations, to obtain channel estimation matrix, where the serving cell is a cell on which the ML receiver camps, the interference cell is a cell interfering with the ML receiver, and the reference signal locations are preset;

a determining unit, configured to calculate first metrics for received signals and the channel estimation matrix, and determine survivor paths of the serving cell according to the first metrics, where the received signals are signals that the ML receiver receives at non-reference signal locations, where

the determining unit is further configured to calculate the second metrics for the received signals and the channel estimation matrix according to the determined survivor paths of the serving cell and all values of an unknown parameter, and determine survivor paths of the interference cell according to the second metrics, where the unknown parameter is a parameter that is unknown when the second metric is calculated, and

the determining unit is further configured to determine final survivor paths according to the survivor paths of the interference cell; and

a calculation unit, configured to calculate a log-likelihood ratio LLR according to the final survivor paths.

With reference to the second aspect, in a first implementation manner of the second aspect, the estimation unit is further configured to estimate value probabilities of the unknown parameter by using the received signals and the channel estimation matrix;

the estimation unit is further configured to estimate signal-to-noise ratios or noise powers of the received signals;

the calculation unit is further configured to calculate prior information of the unknown parameter by using the signal-to-noise ratios or the noise powers and the value probabilities of the unknown parameter; and

the determining unit is further configured to determine the final survivor paths according to the prior information and the survivor paths of the interference cell.

With reference to the first implementation manner of the second aspect, in a second implementation manner of the second aspect, the apparatus further includes:

a classification unit, configured to classify levels of the signal-to-noise ratios or the noise powers; and

a storing unit, configured to store prior information corresponding to the levels, where there is a one-to-one correspondence between the levels and the prior information.

With reference to the second implementation manner of the second aspect, in a third implementation manner of the second aspect, the estimation unit is specifically configured to estimate the levels of the signal-to-noise ratios or the noise powers of the received signals; and

the calculation unit is specifically configured to obtain, according to the levels, the prior information corresponding to the levels.

With reference to the second aspect or any one of the implementation manners of the second aspect, in a fourth implementation manner of the second aspect, the determining unit is specifically configured to calculate the second metrics for the received signals and the channel estimation matrix according to the determined survivor paths of the serving cell and values of the unknown parameter in each of quadrature phase shift keying QPSK, 16 quadrature amplitude modulation 16QAM, and 64 quadrature amplitude modulation 64QAM modulation schemes; and determine, in each of the QPSK, 16QAM, and 64QAM modulation schemes according to ranking of numerical values of the second metrics, N second metrics whose numerical values are minimum, and determine survivor paths that correspond to the N second metrics whose numerical values are minimum as the survivor paths of the interference cell, where N is an integer greater than 1 and less than a total quantity of the second metrics; or

the determining unit is specifically configured to calculate, by the ML receiver, the second metrics for the received signals and the channel estimation matrix according to the determined survivor paths of the serving cell and values of the unknown parameter in each of the QPSK and 16QAM modulation schemes; and determine, in each of the QPSK and 16QAM modulation schemes according to ranking of numerical values of the second metrics, N second metrics whose numerical values are minimum, and determine survivor paths that correspond to the N second metrics whose numerical values are minimum as the survivor paths of the interference cell, where N is an integer greater than 1 and less than a total quantity of the second metrics.

With reference to any one of the implementation manners of the second aspect, in a fifth implementation manner of the second aspect, the determining unit includes:

a calculation subunit, configured to subtract the prior information of the determined survivor paths of the interference cell from the second metrics corresponding to the determined survivor paths of the interference cell, to obtain differences; and

a determining subunit, configured to rank numerical values of the differences corresponding to the determined survivor paths of the interference cell, and determine survivor paths of the interference cell that correspond to X differences whose numerical values are minimum, where X is an integer greater than 1 and less than a total quantity of the survivor paths of the interference cell that are determined in all the subsets, where

the determining subunit is further configured to determine the survivor paths of the interference cell that correspond to the X differences whose numerical values are minimum as the final survivor paths.

With reference to the second aspect or the fourth implementation manner of the second aspect, in a sixth implementation manner of the second aspect, the determining unit is specifically configured to rank, the numerical values of the second metrics corresponding to the determined survivor paths of the interference cell, and determine survivor paths of the interference cell that correspond to M second metrics whose numerical values are minimum, where M is an integer greater than 1 and less than a total quantity of the survivor paths of the interference cell that are determined in all the subsets; and determine the survivor paths of the interference cell that correspond to the M second metrics whose numerical values are minimum as the final survivor paths.

According to the data processing method and apparatus for a maximum likelihood ML receiver that are provided in the embodiments of the present invention, an ML receiver in the present invention performs channel estimation on a serving cell and an interference cell by using signals received at reference signal locations, to obtain channel estimation matrix; then, calculates first metrics for signals received at non-reference signal locations and the channel estimation matrix, and determines survivor paths of the serving cell according to the first metrics; calculates the second metrics for the received signals and the channel estimation matrix according to the determined survivor paths of the serving cell and all values of an unknown parameter, and determines survivor paths of the interference cell according to the second metrics; determines final survivor paths according to the survivor paths of the interference cell; and calculates an LLR according to the final survivor paths. In this way, an ML receiver selects survivor paths of an interference cell by using all possible values of an unknown parameter, which improves accuracy of estimating, by the ML receiver, a to-be-estimated signal by using the unknown parameter, thereby improving an interference cancellation capability of the ML receiver, and reducing a frame error rate of UE using the ML receiver.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of a detection process according to the prior art;
FIG. 2 is a flowchart of a method according to an embodiment of the present invention;
FIG. 3 is a flowchart of a method according to another embodiment of the present invention;
FIG. 4 is a schematic diagram of a detection process according to another embodiment of the present invention;
FIG. 5 is a flowchart of a detection process according to another embodiment of the present invention;
FIG. 6 is a schematic diagram of a simplified solution according to another embodiment of the present invention;
FIG. 7 is a schematic diagram of a simplified solution according to another embodiment of the present invention;
FIG. 8 and FIG. 9 are schematic structural diagrams of an apparatus according to another embodiment of the present invention; and
FIG. 10 is a schematic structural diagram of an apparatus according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An embodiment of the present invention provides a data processing method for a maximum likelihood ML receiver, which is applicable to an ML receiver. As shown in FIG. 2, the method includes:

101: A maximum likelihood ML receiver performs channel estimation on a serving cell and an interference cell by using signals received at reference signal locations, to obtain a channel estimation matrix.

The serving cell is a cell on which the ML receiver camps, and the interference cell is a cell interfering with the ML receiver. The ML receiver receives a data signal by means of the serving cell, and receives an interfering signal by means of the interference cell. The reference signal locations are preset.

102: The ML receiver calculates first metrics for received signals and the channel estimation matrix, and determines survivor paths of the serving cell according to the first metrics.

The received signals are signals that the ML receiver receives at non-reference signal locations. Metric calculation is a calculation process of $\|y\text{-}Hx\|^2$ in the formula (1). The calculation of the first metrics is to perform calculation for the received signals of the serving cell and the channel estimation matrix according to the formula $\|y\text{-}Hx\|^2$, and for a specific calculation process, reference may be made to the prior art.

103: The ML receiver calculates second metrics for the received signals and the channel estimation matrix according to the determined survivor paths of the serving cell and all values of an unknown parameter, and determines survivor paths of the interference cell according to the second metrics.

The unknown parameter is a parameter that is unknown when the second metrics are calculated. The calculation of the first metrics is to perform calculation for the received signals of the interference cell and the channel estimation matrix according to the formula $\|y\text{-}Hx\|^2$, and for a specific calculation process, reference may be made to the prior art.

Optionally, a manner in which the ML receiver calculates the second metrics for the received signals and the channel estimation matrix according to the determined survivor paths of the serving cell and all the values of the unknown parameter, and determines the survivor paths of the interference cell according to the second metrics includes: calculating, by the ML receiver, the second metrics for the received signals and the channel estimation matrix according to the determined survivor paths of the serving cell and values of the unknown parameter in each of quadrature phase shift keying QPSK, 16 quadrature amplitude modulation 16QAM, and 64 quadrature amplitude modulation 64QAM modulation schemes; and then, determining, in each of the QPSK, 16QAM, and 64QAM modulation schemes according to ranking of numerical values of the second metrics, N second metrics whose numerical values are minimum, and determining survivor paths that correspond to the N second metrics whose numerical values are minimum as the survivor paths of the interference cell, where N is an integer greater than 1 and less than a total quantity of the second metrics; or calculating, by the ML receiver, the second metrics for the received signals and the channel estimation matrix according to the determined survivor paths of the serving cell and values of the unknown parameter in each of QPSK and 16QAM modulation schemes; and then, determining, in each of the QPSK, 16QAM, and 64QAM modulation schemes according to ranking of numerical values of the second metrics, N second metrics whose numerical values are minimum, and determining survivor paths that correspond to the N second metrics whose numerical values are minimum as the survivor paths of the interference cell, where N is an integer greater than 1 and less than a total quantity of the second metrics.

104: The ML receiver determines final survivor paths according to the survivor paths of the interference cell.

Optionally, the determining, by the ML receiver, final survivor paths according to the survivor paths of the interference cell may be: ranking, by the ML receiver, the numerical values of the second metrics corresponding to the determined survivor paths of the interference cell, and determining survivor paths of the interference cell that correspond to M second metrics whose numerical values are minimum, where M is an integer greater than 1 and less than a total quantity of the survivor paths of the interference cell that are determined in all subsets; and determining the survivor paths of the interference cell that correspond to the M second metrics whose numerical values are minimum as the final survivor paths.

Optionally, before determining the final survivor paths according to the survivor paths of the interference cell, the ML receiver estimates a value probability of the unknown parameter by using the received signals and the channel estimation matrix, and estimates signal-to-noise ratios or noise powers of the received signals. Then, the ML receiver calculates prior information of the unknown parameter by using the signal-to-noise ratios or the noise powers and the value probabilities of the unknown parameter. A manner in which the ML receiver determines the final survivor paths according to the survivor paths of the interference cell may be: determining, by the ML receiver, the final survivor paths according to the prior information and the survivor paths of the interference cell.

Optionally, before estimating the signal-to-noise ratios or the noise powers of the received signals, the ML receiver may classify levels of the signal-to-noise ratios or the noise powers, and store prior information corresponding to the levels, where there is a one-to-one correspondence between the levels and the prior information.

Further, the estimating, by the ML receiver, signal-to-noise ratios or noise powers of the received signals may be: estimating, by the ML receiver, the levels of the signal-to-noise ratios or the noise powers of the received signals; and accordingly, the calculating, by the ML receiver, prior information of the unknown parameter by using the signal-to-noise ratios or the noise powers and the value probabilities of the unknown parameter may be: obtaining, according to the levels, the prior information corresponding to the levels.

Optionally, the determining, by the ML receiver, the final survivor paths according to the prior information and the survivor paths of the interference cell includes: subtracting, by the ML receiver, the prior information of the determined survivor paths of the interference cell from the second metrics corresponding to the determined survivor paths of the interference cell, to obtain differences; then, ranking the numerical values of the differences corresponding to the determined survivor paths of the interference cell, and determining survivor paths of the interference cell that correspond to X differences whose numerical values are minimum, where X is an integer greater than 1 and less than a total quantity of the survivor paths of the interference cell that are determined in all subsets; and determining the survivor paths of the interference cell that correspond to the X differences whose numerical values are minimum as the final survivor paths.

105: The ML receiver calculates a log-likelihood ratio LLR according to the final survivor paths.

In the prior art, a probability of correctly estimating an unknown parameter is generally relatively low. When the parameter is estimated incorrectly, an ML receiver cannot work normally, which reduces an interference cancellation capability of the ML receiver, and results in a high frame error rate of UE using the ML receiver. Compared with the prior art, in this embodiment of the present invention, an ML receiver performs channel estimation on a serving cell and an interference cell by using received signals at reference signal locations, to obtain a channel estimation matrix; then, calculates first metrics for a signal received at non-reference signal locations and the channel estimation matrix, and determines survivor paths of the serving cell according to the first metrics; calculates the second metrics for the received signals and the channel estimation matrix according to the determined survivor paths of the serving cell and all values of an unknown parameter, and determines survivor paths of the interference cell according to the second metrics; determines final survivor paths according to the survivor paths of the interference cell; and calculates an LLR according to the final survivor paths. In this way, an ML receiver selects survivor paths of an interference cell by using all possible values of an unknown parameter, which improves accuracy of estimating a to-be-estimated signal by using the unknown parameter at the ML receiver, thereby improving an interference cancellation capability of the ML receiver, and reducing a frame error rate of UE using the ML receiver.

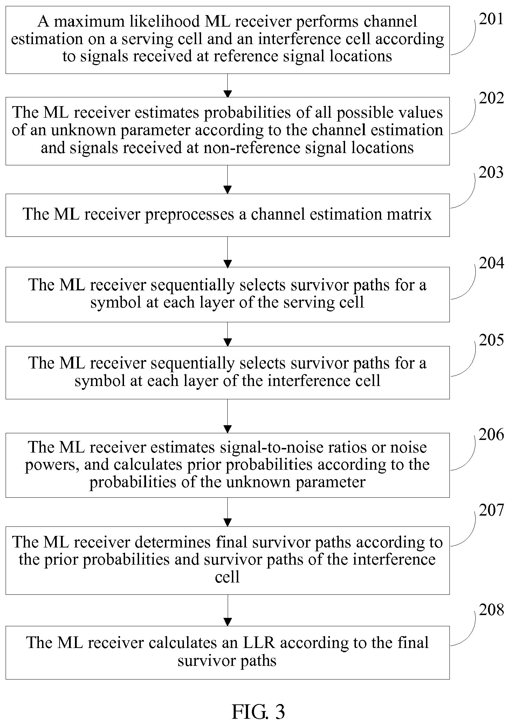

Another embodiment of the present invention provides a data processing method for a maximum likelihood ML receiver, which is applicable to an ML receiver. In an LTE system of multiple cells, by using an improved algorithm of estimation of an unknown parameter of an interference symbol, probabilities of all possible values of the unknown parameter are obtained. For example, probabilities of possible values of the interference symbol in QPSK, 16QAM, and 64QAM modulation schemes are separately obtained. An unknown parameter ML receiver estimates an LLR of a current cell by using these probabilities and provides the LLR for decoding. As shown in FIG. 3, the method includes:

201: A maximum likelihood ML receiver performs channel estimation on a serving cell and an interference cell according to signals received at reference signal locations.

The receiver performs channel estimation on the serving cell and the interference cell according to a signal $y_1$ received at the reference signal location. The reference signal location is sent by a transmitter, and is used by the ML receiver to perform the channel estimation.

It should be noted that received signals of the ML receiver include a signal $y_1$ received at the reference signal location and a signal y received at non-reference signal locations.

202: The ML receiver estimates probabilities of all possible values of an unknown parameter according to the channel estimation and the signals received at the non-reference signal locations.

The ML receiver estimates probabilities of all possible values of the unknown parameter by using an improved clustering or generic maximum log-likelihood algorithm.

It should be noted that an example in which the unknown parameter is a modulation order is used in this embodiment of the present invention. A classical clustering algorithm is actually to select, in QPSK, 16QAM, and 64QAM modulation schemes, a sample statistics probability which is maximum in all the sample statistics probabilities of the unknown parameter as an estimation result, and an improved algorithm is to directly output sample statistics probabilities corresponding to the QPSK, 16QAM, and 64QAM. The classical generic maximum log-likelihood algorithm obtains a determining result by determining a symbol of a log-likelihood ratio. For example, $L$(QPSK, 16QAM) represents a log-likelihood ratio of the QPSK to the 16QAM, and $L$(QPSK, 64QAM) represents a log-likelihood ratio of the QPSK to the 64QAM. If both $L$(QPSK, 16QAM) and $L$(QPSK, 64QAM) are greater than 0, the estimation result is the QPSK. Actually, the foregoing log-likelihood ratio is obtained through calculation of likelihood probabilities of the QPSK, 16QAM, and 64QAM, and the improved algorithm directly outputs the likelihood probabilities of the QPSK, the 16QAM, and the 64QAM.

For example, the modulation order is the unknown parameter. An ML detection algorithm of the unknown parameter is described. Because symbols at different layers are independent of each other, the formula (1) may be rewritten as:

$$L\left(b_{j,i}\right) = \ln \frac{\sum_{\{x_1\}}\cdots\sum_{\{x_j\}:b_{j,i}=1}\cdots\sum_{\{x_L\}}\Pr\left(y\middle|x\right)\left\{\Pr\left(x_1\right)\cdots\Pr\left(x_L\right)\right\}}{\sum_{\{x_1\}}\cdots\sum_{\{x_j\}:b_{j,i}=0}\cdots\sum_{\{x_L\}}\Pr\left(y\middle|x\right)\left\{\Pr\left(x_1\right)\cdots\Pr\left(x_L\right)\right\}}$$

$$= \ln \frac{\sum_{\{x_1\}}\cdots\sum_{\{x_j\}:b_{j,i}=1}\cdots\sum_{\{x_L\}}\Pr\left(y\middle|x\right)\left\{\Pr\left(x_B\right)\cdots\Pr\left(x_L\right)\right\}}{\sum_{\{x_1\}}\cdots\sum_{\{x_j\}:b_{j,i}=0}\cdots\sum_{\{x_L\}}\Pr\left(y\middle|x\right)\left\{\Pr\left(x_B\right)\cdots\Pr\left(x_L\right)\right\}}$$

(2)

where Pr() is a probability function, **Pr**($y|x$) represents a probability of y under a condition x, the second equation holds because $\boldsymbol{x}_s=[x_1, x_2, ..., x_B]^T$ is a set of symbols of the serving cell, a modulation order of the symbols is known, and probabilities of values of all constellation points are equal. A key of the ML detection algorithm of the unknown parameter lies in assuming that a constellation point of an interference symbol is a hybrid form of the QPSK, 16QAM, and 64QAM, and a probability of each constellation point is determined by prior information of the QPSK, 16QAM, and 64QAM. The formula (2) may be further written as:

$$L\left(b_{j,i}\right) \approx \frac{1}{\sigma^2}\left\{\begin{array}{l}\min_{\{x\}:b_{j,i}=1}\left(\left\|y-Hx\right\|^2 - \sigma^2\sum_B^L \ln\Pr\left(x_k\right)\right)\\ -\min_{\{x\}:b_{j,i}=0}\left(\left\|y-Hx\right\|^2 - \sigma^2\sum_B^L \ln\Pr\left(x_k\right)\right)\end{array}\right\}$$

$$= \frac{1}{\sigma^2}\left\{\begin{array}{l}\min_{\{x\}:b_{j,i}=1}\left(\left\|\tilde{y}-Rx\right\|^2 - \sigma^2\sum_B^L \ln\Pr\left(x_k\right)\right)\\ -\min_{\{x\}:b_{j,i}=0}\left(\left\|\tilde{y}-Rx\right\|^2 - \sigma^2\sum_B^L \ln\Pr\left(x_k\right)\right)\end{array}\right\}$$

(3)

where QR decomposition is performed on **H** in the second equation, to help select a survivor path, that is, **H=QR**, and $\tilde{y} = Q\boldsymbol{\cdot}\tilde{y}$. A probability in the formula (3) is:

$$\Pr\left(x_k\right) = \left\{\begin{array}{l}\frac{1}{4}\Pr\left(QPSK\right), \text{if } x_k \in \text{subset}_{QPSK}\\ \frac{1}{16}\Pr\left(16QAM\right), \text{if } x_k \in \text{subset}_{16QAM}\\ \frac{1}{64}\Pr\left(64QAM\right), \text{if } x_k \in \text{subset}_{64QAM}\end{array}\right\}$$

That is, prior information of a symbol is determined by prior probabilities in the QPSK, 16QAM, and 64QAM modulation schemes, and a quantity of possible values in the modulation scheme. For example, if $\boldsymbol{x}_k$ is an element in the 16QAM, prior information of $\boldsymbol{x}_k$ is determined by a prior probability Pr(16QAM) in the 16QAM modulation scheme and a quantity of elements that is 16 in the 16QAM.

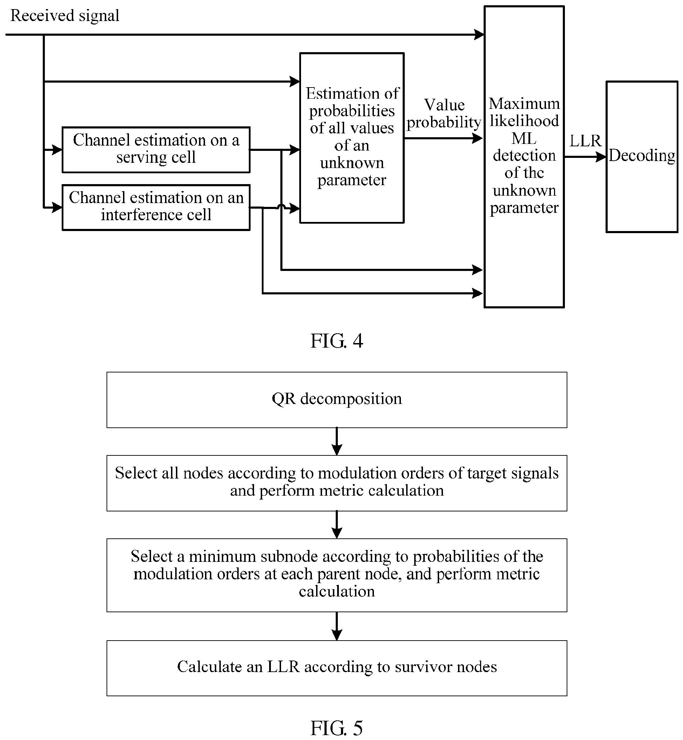

It should be noted that the following steps are an ML detection process of the unknown parameter, and an implementation block diagram of the ML detection process of the unknown parameter is shown in FIG. 4.

203: The ML receiver preprocesses channel estimation matrix.

To simplify complexity of calculating minimum metrics in the formula (3), the channel matrix may be preprocessed first. For example, QR decomposition is performed on **H**.

It should be noted that, this step is an optional step.

204: The ML receiver sequentially selects survivor paths for a symbol at each layer of the serving cell.

The problem of calculating minimum metrics after preprocessing is performed is converted into a "tree search" problem. In the present invention, symbols corresponding to the serving cell are placed at "parent node" locations (that is, first searched for). Because these symbols have no unknown parameter, erroneous transfer may be reduced. The ML receiver sequentially selects $M_i$ ($B \geq i \geq 1$) survivor paths for a symbol at each layer of the serving cell. In this embodiment of the present invention, metric calculation is performed for paths according to $\|y\text{-}Hx\|^2$ in the formula (3), and $M_i$ minimum paths are selected.

It should be noted that a selection process is a search process. An example in which the unknown parameter is the modulation order is used in this embodiment of the present invention, and the selection process in this step is to select, according to a modulation order and from a corresponding set of the modulation order, $M_i$ sampling points whose corresponding metrics are minimum as the survivor paths.

205: The ML receiver sequentially selects survivor paths for a symbol at each layer of the interference cell.

All possible values of the unknown parameter need to be considered for the selection of the survivor paths. For example, all possible values in the QPSK, 16QAM, and 64QAM modulation schemes need to be considered. In the present invention, symbols corresponding to the interference cell are placed at "subnode" locations. For all the survivor paths at "parent nodes", several sampling points whose metrics are relatively small are selected from the sets corresponding to the modulation orders as updated survivor paths. This selection process is the same as that of step 204.

206: The ML receiver estimates signal-to-noise ratios or noise powers, and calculates prior probabilities according to the probabilities of the unknown parameter.

The ML receiver estimates the signal-to-noise ratios or the noise powers, and calculates prior probabilities according to the probabilities of the unknown parameter that are obtained through estimation in step 202.

It should be noted that, step 205 needs to be performed after step 204, but there is no time sequence for performing of step 206 and step 204, and of step 206 and step 205.

207: The ML receiver determines final survivor paths according to the prior probabilities and survivor paths of the interference cell.

The ML receiver determines the final survivor paths according to the prior information, so that a quantity of final survivor paths at the $i$th layer is $M_i$ ($L \geq i \geq B+1$). In this embodiment of the present invention, metric calculation is performed for the selected paths according to $\left\| \tilde{y} - Rx \right\|^2 - \sigma^2 \sum_{B}^{L} \ln \Pr\left( x_k \right)$ in the formula (3), and the $M_i$ ($L \geq i \geq B+1$) minimum paths are selected.

208: The ML receiver calculates an LLR according to the final survivor paths.

After the survivor paths are processed in step 207, the ML receiver calculates the LLR according to the final survivor paths by using the formula (3).

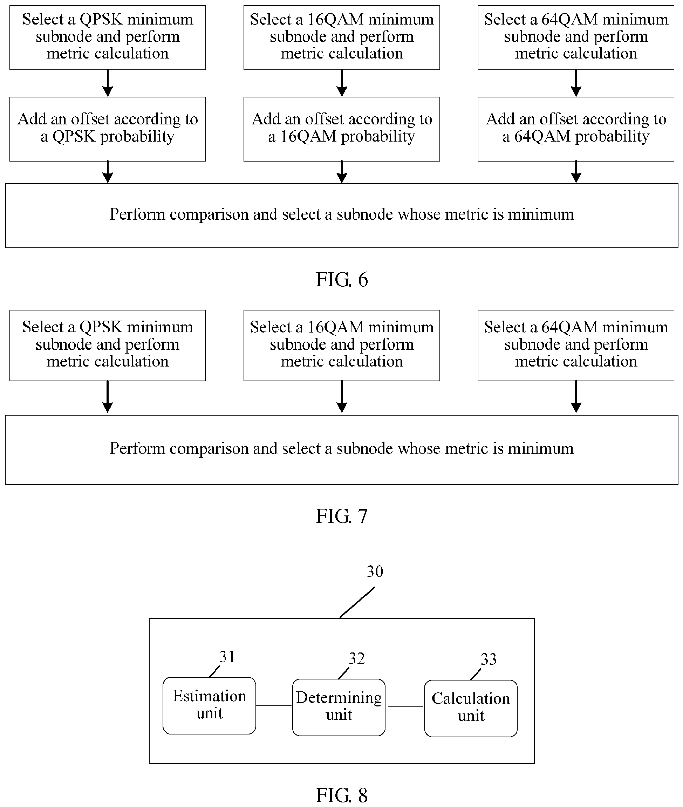

Specifically, FIG. 5 is an example of a specific detection process of the unknown parameter ML receiver from step 203 to step 208. Considering a scenario in which UE is located at a cell edge, in this case, generally only one layer of signal can be scheduled in the serving cell. Strongest interference seen by this UE is also located at the cell edge, and this UE may also schedule only one layer of signal, that is, $L$=2, and $B$=1. This scenario is a relatively classical scenario in which the UE starts interference cancellation. QR decomposition is performed first, target signals (that is, transmitted symbols of the serving cell) are placed at the "parent nodes", and all nodes are selected for metric calculation. For each "parent node", only a minimum subnode is selected for metric calculation. FIG. 6 shows a process in which the minimum subnode of each "parent node" is selected for metric calculation. Finally, the LLR is calculated according to survivor nodes.

It should be noted that a subnode selection procedure is: separately selecting minimum subnodes for three subsets in QPSK, 16QAM, and 64QAM, and performing metric calculation; then, processing the survivor paths according to the prior probabilities, that is, separately adding offsets that are related to the prior information to three subnodes; and finally comparing three metrics, and selecting a minimum metric and subnode.

Further, for a procedure of selecting the subnode by the foregoing unknown parameter ML receiver, the solution may be further simplified.

Specifically, a first simplified solution is: only two types of constellation points: the QPSK and 16QAM are considered. Generally, if the unknown parameter is in the 16QAM, but is erroneously estimated to be in the 64QAM, an impact in performance is relatively small (vice versa). Therefore, in this simplified solution, interference can still be rejected well in a classical scenario, which reduces an optional range of a survivor metric of an interference symbol, and reduces calculation complexity.

A second simplified solution is: the noise powers or signal-to-noise ratios are graded, where each grade corresponds to one piece of prestored prior information. When the estimated signal-to-noise ratio or noise power is located within a grading interval, the survivor path is processed by using prior information corresponding to the grade, which reduces calculation complexity of prior information, and also reduces dependency of the prior information on estimation accuracy of a noise power or signal-to-noise ratio. That is, the LLR may be represented as:

$$L\left(b_{j,i}\right) \approx \left\{ \begin{array}{c} \min_{\{x\}:b_{j,i}=1}\left(\left\|\tilde{y}-Rx\right\|^2 - \sum_B^L table\left(x_k \text{signal}-\text{to}-\text{noise ratio}, x_k \text{modulation order}\right)\cdot \ln \Pr\left(x_k \text{modulation order}\right)\right) \\ -\min_{\{x\}:b_{j,i}=0}\left(\left\|\tilde{y}-Rx\right\|^2 - \sum_B^L table\left(x_k \text{signal}-\text{to}-\text{noise ratio}, x_k \text{modulation order}\right)\cdot \ln \Pr\left(x_k \text{modulation order}\right)\right) \end{array} \right\}$$

where table(,) is a two-dimensional table, a first dimension is searched according to the signal-to-noise ratio or noise power, and a second dimension is determined by a debugging level. table(,) may be predetermined by means of offline emulation, and $\Pr(x_k$ modulation order) is a probability of a modulation order corresponding to $x_k$ (that is, a value probability of the unknown parameter).

A third simplified solution is: as shown in FIG. 7, a step of adding an offset according to the prior information is removed, and a calculation process is simplified. In the simplified solution shown in FIG. 7, step 202 and step 206 do not need to be performed, and in step 207, the ML receiver needs to determine the final survivor paths only according to the survivor paths of the interference cell.

It should be noted that a data processing process is described in this embodiment of the present invention by using the modulation order as the unknown parameter. When the unknown parameter is a transmission mode and a PMI, an interference equivalent transmitted symbol is $\tilde{x}_i = Px_i$, where a matrix P is determined by the transmission mode and the PMI. Obviously, elements in an equivalent vector $\tilde{x}_i$ are not necessarily independent of each other. Therefore, the formula (2) may be rewritten as:

$$L\left(b_{j,i}\right) = \ln \frac{\sum_{\{x\}:b_{j,i}=1} \Pr\left(y\middle|x\right)\Pr\left(\tilde{x}_i\right)}{\sum_{\{x\}:b_{j,i}=0} \Pr\left(y\middle|x\right)\Pr\left(\tilde{x}_i\right)}$$

$$\approx \frac{1}{\sigma^2}\left\{ \min_{\{x\}:b_{j,i}=1}\left(\left\|y-Hx\right\|^2 - \sigma^2 \ln \Pr\left(\tilde{x}_i\right)\right) - \min_{\{x\}:b_{j,i}=0}\left(\left\|y-Hx\right\|^2 - \sigma^2 \ln \Pr\left(\tilde{x}_i\right)\right) \right\}$$

where prior information of $\tilde{x}_i$ cannot be decomposed into a product of probabilities of the layers, and $\Pr(\tilde{x}_i)$ is given by an unknown parameter value probability estimation module. Another calculation process is the same as the calculation process of the foregoing steps, and details are not described herein again.

In the prior art, a probability of correctly estimating an unknown parameter is generally relatively low. When the parameter is estimated incorrectly, an ML receiver cannot normally work, which reduces an interference cancellation capability of the ML receiver, and results in a high frame error rate of UE using the ML receiver. Compared with the prior art, in this embodiment of the present invention, an ML receiver performs channel estimation on a serving cell and an interference cell by using signals received at reference signal locations, to obtain channel estimation matrix; then, calculates first metrics for signals received at non-reference signal locations and the channel estimation matrix, and determines survivor paths of the serving cell according to the first metrics; calculates the second metrics for the received signals and the channel estimation matrix according to the determined survivor paths of the serving cell and all values of an unknown parameter, and determines survivor paths of the interference cell according to the second metrics; determines final survivor paths according to the survivor paths of the interference cell; and calculates an LLR according to the final survivor paths. In this way, an ML receiver selects survivor paths of an interference cell by using all possible values of an unknown parameter, which improves accuracy of estimating, by the ML receiver, a to-be-estimated signal by using the unknown parameter, thereby improving an interference cancellation capability of the ML receiver, and reducing a frame error rate of UE using the ML receiver.

Another embodiment of the present invention provides a data processing apparatus 30 for a maximum likelihood ML receiver. As shown in FIG. 8, the apparatus 30 includes:

an estimation unit 31, configured to perform channel estimation on a serving cell and an interference cell by using signals that an ML receiver receives at reference locations, to obtain channel estimation matrix, where the serving cell is a cell on which the ML receiver camps, and the interference cell is a cell interfering with the ML receiver;
a determining unit 32, configured to calculate first metrics for the received signals and the channel estimation matrix, and determine survivor paths of the serving cell, where the received signals are signals that the ML receiver receives at non-reference locations, where
the determining unit 32 is further configured to calculate the second metrics for the received signals and the channel estimation matrix according to the determined survivor paths of the serving cell and all values of an unknown parameter, and determine survivor paths of the interference cell, and
the determining unit 32 is further configured to determine final survivor paths according to the survivor paths of the interference cell; and
a calculation unit 33, configured to calculate a log-likelihood ratio LLR according to the final survivor paths.

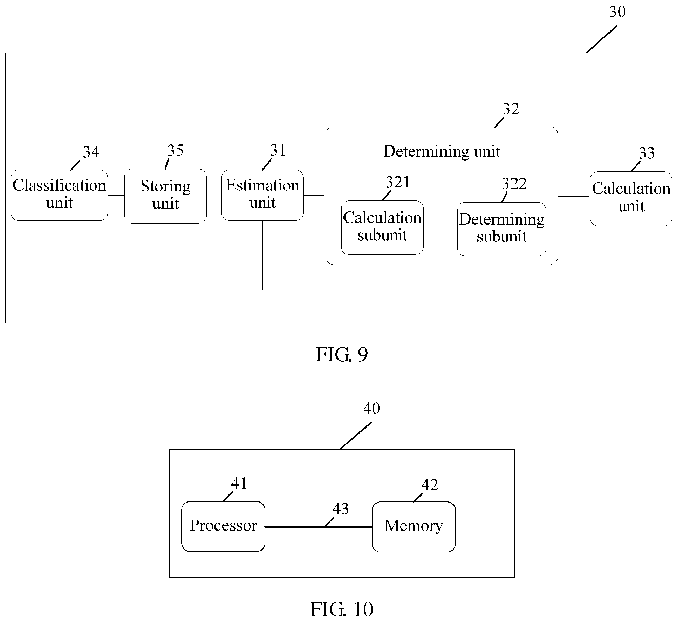

Further, the estimation unit 31 is further configured to estimate value probabilities of the unknown parameter by using the received signals and the channel estimation matrix.
The estimation unit 31 is further configured to estimate signal-to-noise ratios or noise powers of the received signals.
The calculation unit 33 is further configured to calculate prior information of the unknown parameter by using the signal-to-noise ratios or the noise powers and the value probabilities of the unknown parameter.
The determining unit 32 is further configured to determine the final survivor paths according to the prior information and the survivor paths of the interference cell.
Further, as shown in FIG. 9, the shown apparatus 30 may further include:

a classification unit 34, configured to classify levels of the signal-to-noise ratios or the noise powers; and
a storing unit 35, configured to store prior information corresponding to the levels, where there is a one-to-one correspondence between the levels and the prior information.

Further, the estimation unit 31 is specifically configured to estimate the levels of the signal-to-noise ratios or the noise powers of the received signals.
The calculation unit 32 is specifically configured to obtain, according to the levels, the prior information corresponding to the levels.
Further, as shown in FIG. 9, the determining unit 32 includes:

a calculation subunit 321, configured to subtract the prior information of the determined survivor paths of the interference cell from the second metrics corresponding to the determined survivor paths of the interference cell, to obtain differences; and
a determining subunit 322, configured to rank numerical values of the differences corresponding to the determined survivor paths of the interference cell that are in all subsets, and determine survivor paths of the interference cell that correspond to X differences whose numerical values are minimum, where X is an integer greater than 1 and less than a total quantity of the survivor paths of the interference cell that are determined in all the subsets.

The determining subunit 322 is further configured to determine the survivor paths of the interference cell that correspond to the X differences whose numerical values are minimum as the final survivor paths.
Further, the determining unit 32 is specifically configured to calculate the second metrics for the received signals and the channel estimation matrix according to the determined survivor paths of the serving cell and elements of a subset in each of quadrature phase shift keying QPSK, 16 quadrature amplitude modulation 16QAM, and 64 quadrature amplitude modulation 64QAM; and determine, according to ranking of numerical values of the second metrics, N second metrics whose numerical values are minimum, and determine survivor paths that correspond to the N second metrics whose numerical values are minimum as the survivor paths of the interference cell, where N is an integer greater than 1 and less than a total quantity of the second metrics; or
the determining unit is specifically configured to calculate, by the ML receiver, the second metrics for the received signals and the channel estimation matrix according to the determined survivor paths of the serving cell and elements of a subset in each of the QPSK and 16QAM; and determine, according to ranking of numerical values of the second metrics, N second metrics whose numerical values are minimum, and determine survivor paths that correspond to the N second metrics whose numerical values are minimum as the survivor paths of the interference cell, where N is an integer greater than 1 and less than a total quantity of the second metrics.
Further, the determining unit 32 is specifically configured to rank, the numerical values of the second metrics corresponding to the determined survivor paths of the interference cell that are in all subsets, and determine survivor paths of the interference cell that correspond to M second metrics whose numerical values are minimum, where M is an integer greater than 1 and less than a total quantity of the survivor paths of the interference cell that are determined in all the subsets; and determine the survivor paths of the interference cell that correspond to the M second metrics whose numerical values are minimum as the final survivor paths.
In the prior art, a probability of correctly estimating an unknown parameter is generally relatively low. When the parameter is estimated incorrectly, an ML receiver cannot normally work, which reduces an interference cancellation capability of the ML receiver, and results in a high frame error rate of UE using the ML receiver. Compared with the prior art, in this embodiment of the present invention, the apparatus 30 performs channel estimation on a serving cell and an interference cell by using signals received at reference signal locations, to obtain channel estimation matrix; then, calculates first metrics for signals received at non-reference signal locations and the channel estimation matrix, and determines survivor paths of the serving cell according to the first metrics; calculates the second metrics for the received signals and the channel estimation matrix according to the determined survivor paths of the serving cell and all values of an unknown parameter, and determines survivor paths of the interference cell according to the second metrics; determines final survivor paths according to the survivor paths of the interference cell; and calculates an LLR according to the final survivor paths. In this way, the apparatus 30 selects survivor paths of an interference cell by using all possible values of an unknown parameter, which improves accuracy of estimating, by the apparatus 30, a to-be-estimated signal by using the unknown parameter, thereby improving an interference cancellation capability of the apparatus 30, and reducing a frame error rate of UE using the ML receiver.

The data processing apparatus for a maximum likelihood ML receiver provided in this embodiment of the present invention may implement the foregoing provided method embodiments. For specific functional implementations, refer to descriptions in the method embodiments, and details are not described herein again. The data processing method and apparatus for a maximum likelihood ML receiver provided in the embodiments of the present invention are applicable to an ML receiver, but are not limited thereto.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM), or the like.

An embodiment of the present invention further provides a data processing apparatus 40 for an ML receiver, as shown in FIG. 10, including a bus 43, a processor 41, and a memory 42. The processor 41 is connected to the memory 42 by using the bus 43. Computer program code is stored in the memory 42. The processor 41 reads the computer program code from the memory 42 by using the bus 43, and is driven by the computer program code to perform the method described in the embodiments of the present invention. For a specific method, reference may be made to the descriptions in the foregoing embodiments, and details are not described herein.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A data processing method for a maximum likelihood ML receiver, comprising:

performing, by the ML receiver, channel estimation on a serving cell and an interference cell by using signals received at reference signal locations, to obtain a channel estimation matrix, wherein the serving cell is a cell on which the ML receiver camps, the interference cell is a cell interfering with the ML receiver, and the reference signal locations are preset;

calculating, by the ML receiver, first metrics for received signals and the channel estimation matrix, and determining survivor paths of the serving cell according to the first metrics, wherein the received signals are signals that the ML receiver receives at non-reference signal locations;

calculating, by the ML receiver, second metrics for the received signals and the channel estimation matrix according to the determined survivor paths of the serving cell and all values of an unknown parameter, and determining survivor paths of the interference cell according to the second metrics, wherein the unknown parameter is a parameter that is unknown when the second metric is calculated;

determining, by the ML receiver, final survivor paths according to the survivor paths of the interference cell; and

calculating, by the ML receiver, a log-likelihood ratio LLR according to the final survivor paths.

2. The method according to claim 1, wherein before the determining, by the ML receiver, final survivor paths according to the survivor paths of the interference cell, the method further comprises:

estimating, by the ML receiver, value probabilities of the unknown parameter by using the received signals and the channel estimation matrix;
estimating, by the ML receiver, signal-to-noise ratios or noise powers of the received signals; and
calculating, by the ML receiver, prior information of the unknown parameter by using the signal-to-noise ratios or the noise powers and the value probabilities of the unknown parameter; and
the determining, by the ML receiver, final survivor paths according to the survivor paths of the interference cell comprises:

determining, by the ML receiver, the final survivor paths according to the prior information and the survivor paths of the interference cell.

3. The method according to claim 2, wherein before the estimating, by the ML receiver, signal-to-noise ratios or noise powers of the received signals, the method further comprises:

classifying, by the ML receiver, levels of the signal-to-noise ratios or the noise powers; and
storing, by the ML receiver, prior information corresponding to the levels, wherein there is a one-to-one correspondence between the levels and the prior information.

4. The method according to claim 3, wherein the estimating, by the ML receiver, signal-to-noise ratios or noise powers of the received signals comprises:

estimating, by the ML receiver, the levels of the signal-to-noise ratios or the noise powers of the received signals; and
the calculating, by the ML receiver, prior information of the unknown parameter by using the signal-to-noise ratios or the noise powers and the value probabilities of the unknown parameter comprises:

obtaining, by the ML receiver according to the levels, the prior information corresponding to the levels.

5. The method according to any one of claims 1 to 4, wherein the calculating, by the ML receiver, second metrics for the received signals and the channel estimation matrix according to the determined survivor paths of the serving cell and all values of an unknown parameter, and determining survivor paths of the interference cell according to the second metrics comprises:

calculating, by the ML receiver, the second metrics for the received signals and the channel estimation matrix according to the determined survivor paths of the serving cell and values of the unknown parameter in each of quadrature phase shift keying QPSK, 16 quadrature amplitude modulation 16QAM, and 64 quadrature amplitude modulation 64QAM modulation schemes; and
determining, in each of the QPSK, 16QAM, and 64QAM modulation schemes according to ranking of numerical values of the second metrics, N second metrics whose numerical values are minimum, and determining survivor paths that correspond to the N second metrics whose numerical values are minimum as the survivor paths of the interference cell, wherein N is an integer greater than 1 and less than a total quantity of the second metrics; or
calculating, by the ML receiver, the second metrics for the received signals and the channel estimation matrix according to the determined survivor paths of the serving cell and values of the unknown parameter in each of the QPSK and 16QAM modulation schemes; and
determining, in each of the QPSK and 16QAM modulation schemes according to ranking of numerical values of the second metrics, N second metrics whose numerical values are minimum, and determining survivor paths that correspond to the N second metrics whose numerical values are minimum as the survivor paths of the interference cell, wherein N is an integer greater than 1 and less than a total quantity of the second metrics.

6. The method according to any one of claims 2 to 5, wherein the determining, by the ML receiver, the final survivor paths according to the prior information and the survivor paths of the interference cell comprises:

subtracting, by the ML receiver, the prior information of the determined survivor paths of the interference cell from the second metrics corresponding to the determined survivor paths of the interference cell, to obtain differences;

ranking, by the ML receiver, numerical values of the differences corresponding to the determined survivor paths of the interference cell, and determining survivor paths of the interference cell that correspond to X differences whose numerical values are minimum, wherein X is an integer greater than 1 and less than a total quantity of the survivor paths of the interference cell that are determined in all the subsets; and

determining the survivor paths of the interference cell that correspond to the X differences whose numerical values are minimum as the final survivor paths.

7. The method according to claim 1 or 5, wherein the determining, by the ML receiver, final survivor paths according to the survivor paths of the interference cell comprises:

ranking, by the ML receiver, numerical values of the second metrics corresponding to the determined survivor paths of the interference cell, and determining survivor paths of the interference cell that correspond to M second metrics whose numerical values are minimum, wherein M is an integer greater than 1 and less than a total quantity of the survivor paths of the interference cell that are determined in all the subsets; and

determining the survivor paths of the interference cell that correspond to the M second metrics whose numerical values are minimum as the final survivor paths.

8. A data processing apparatus for a maximum likelihood ML receiver, comprising:

an estimation unit, configured to perform channel estimation on a serving cell and an interference cell by using signals received at reference signal locations, to obtain a channel estimation matrix, wherein the serving cell is a cell on which the ML receiver camps, the interference cell is a cell interfering with the ML receiver, and the reference signal locations are preset;

a determining unit, configured to calculate first metrics for received signals and the channel estimation matrix, and determine survivor paths of the serving cell according to the first metrics, wherein the received signals are signals that the ML receiver receives at non-reference signal locations, wherein

the determining unit is further configured to calculate the second metrics for the received signals and the channel estimation matrix according to the determined survivor paths of the serving cell and all values of an unknown parameter, and determine survivor paths of the interference cell according to the second metrics, wherein the unknown parameter is a parameter that is unknown when the second metric is calculated, and the determining unit is further configured to determine final survivor paths according to the survivor paths of the interference cell; and

a calculation unit, configured to calculate a log-likelihood ratio LLR according to the final survivor paths.

9. The apparatus according to claim 8, wherein the estimation unit is further configured to estimate value probabilities of the unknown parameter by using the received signals and the channel estimation matrix;

the estimation unit is further configured to estimate signal-to-noise ratios or noise powers of the received signals;

the calculation unit is further configured to calculate prior information of the unknown parameter by using the signal-to-noise ratios or the noise powers and the value probabilities of the unknown parameter; and

the determining unit is further configured to determine the final survivor paths according to the prior information and the survivor paths of the interference cell.

10. The apparatus according to claim 9, wherein the apparatus further comprises:

a classification unit, configured to classify levels of the signal-to-noise ratios or the noise powers; and

a storing unit, configured to store prior information corresponding to the levels, wherein there is a one-to-one correspondence between the levels and the prior information.

11. The apparatus according to claim 10, wherein the estimation unit is specifically configured to estimate the levels of the signal-to-noise ratios or the noise powers of the received signals; and

the calculation unit is specifically configured to obtain, according to the levels, the prior information corresponding to the levels.

12. The apparatus according to any one of claims 8 to 11, wherein the determining unit is specifically configured to calculate the second metrics for the received signals and the channel estimation matrix according to the determined survivor paths of the serving cell and values of the unknown parameter in each of quadrature phase shift keying QPSK, 16 quadrature amplitude modulation 16QAM, and 64 quadrature amplitude modulation 64QAM modulation schemes; and determine, in each of the QPSK, 16QAM, and 64QAM modulation schemes according to ranking of numerical values of the second metrics, N second metrics whose numerical values are minimum, and determine survivor paths that correspond to the N second metrics whose numerical values are minimum as the survivor paths of the interference cell, wherein N is an integer greater than 1 and less than a total quantity of the second metrics; or the determining unit is specifically configured to calculate, by the ML receiver, the second metrics for the received signals and the channel estimation matrix according to the determined survivor paths of the serving cell and values of the unknown parameter in each of the QPSK and 16QAM modulation schemes; and determine, in each of the QPSK and 16QAM modulation schemes according to ranking of numerical values of the second metrics, N second metrics whose numerical values are minimum, and determine survivor paths that correspond to the N second metrics whose numerical values are minimum as the survivor paths of the interference cell, wherein N is an integer greater than 1 and less than a total quantity of the second metrics.

13. The apparatus according to any one of claims 9 to 12, wherein the determining unit comprises:

a calculation subunit, configured to subtract the prior information of the determined survivor paths of the interference cell from the second metrics corresponding to the determined survivor paths of the interference cell, to obtain differences; and
a determining subunit, configured to rank numerical values of the differences corresponding to the determined survivor paths of the interference cell, and determine survivor paths of the interference cell that correspond to X differences whose numerical values are minimum, wherein X is an integer greater than 1 and less than a total quantity of the survivor paths of the interference cell that are determined in all the subsets, wherein the determining subunit is further configured to determine the survivor paths of the interference cell that correspond to the X differences whose numerical values are minimum as the final survivor paths.

14. The apparatus according to claim 8 or 12, wherein the determining unit is specifically configured to rank, the numerical values of the second metrics corresponding to the determined survivor paths of the interference cell, and determine survivor paths of the interference cell that correspond to M second metrics whose numerical values are minimum, wherein M is an integer greater than 1 and less than a total quantity of the survivor paths of the interference cell that are determined in all the subsets; and determine the survivor paths of the interference cell that correspond to the M second metrics whose numerical values are minimum as the final survivor paths.

Received signal

```
Channel estimation on a
serving cell
```

```
Channel estimation on an
interference cell
```

```
Estimation
of an
unknown
parameter
of an
interference
symbol
```

```
Maximum
likelihood
ML
detection
```

LLR

```
Decoding
```

FIG. 1

A maximum likelihood ML receiver performs channel estimation on a serving cell and an interference cell by using signals received at reference signal locations, to obtain a channel estimation matrix ⟩101

The ML receiver calculates first metrics for received signals and the channel estimation matrix, and determines survivor paths of the serving cell according to the first metrics ⟩102

The ML receiver calculates second metrics for the received signals and the channel estimation matrix according to the determined survivor paths of the serving cell and all values of an unknown parameter, and determines survivor paths of the interference cell according to the second metrics ⟩103

The ML receiver determines final survivor paths according to the survivor paths of the interference cell ⟩104

The ML receiver calculates a log-likelihood ratio LLR according to the final survivor paths ⟩105

FIG. 2

A maximum likelihood ML receiver performs channel estimation on a serving cell and an interference cell according to signals received at reference signal locations — 201

The ML receiver estimates probabilities of all possible values of an unknown parameter according to the channel estimation and signals received at non-reference signal locations — 202

The ML receiver preprocesses a channel estimation matrix — 203

The ML receiver sequentially selects survivor paths for a symbol at each layer of the serving cell — 204

The ML receiver sequentially selects survivor paths for a symbol at each layer of the interference cell — 205

The ML receiver estimates signal-to-noise ratios or noise powers, and calculates prior probabilities according to the probabilities of the unknown parameter — 206

The ML receiver determines final survivor paths according to the prior probabilities and survivor paths of the interference cell — 207

The ML receiver calculates an LLR according to the final survivor paths — 208

FIG. 3

Received signal

```
                                    ┌──────────┐
                                    │Estimation of│  Value   ┌──────────┐
                                    │probabilities│probability│Maximum  │
        ┌──────────────────────┐    │of all values│──────────▶│likelihood│  LLR  ┌────────┐
        │Channel estimation on a│──▶│ of an       │          │   ML     │──────▶│Decoding│
        │     serving cell      │    │unknown      │          │detection │       └────────┘
        └──────────────────────┘    │parameter    │          │ of the   │
        ┌──────────────────────┐    └──────────┘              │unknown   │
        │Channel estimation on an│                            │parameter │
        │   interference cell    │                            └──────────┘
        └──────────────────────┘
```

FIG. 4

┌─────────────────────────────────────────────────────┐
│                    QR decomposition                  │
└─────────────────────────────────────────────────────┘
                          │
                          ▼
┌─────────────────────────────────────────────────────┐
│ Select all nodes according to modulation orders of target signals │
│              and perform metric calculation          │
└─────────────────────────────────────────────────────┘
                          │
                          ▼
┌─────────────────────────────────────────────────────┐
│ Select a minimum subnode according to probabilities of the │
│ modulation orders at each parent node, and perform metric │
│                     calculation                      │
└─────────────────────────────────────────────────────┘
                          │
                          ▼
┌─────────────────────────────────────────────────────┐
│     Calculate an LLR according to survivor nodes     │
└─────────────────────────────────────────────────────┘

FIG. 5

| Select a QPSK minimum subnode and perform metric calculation | Select a 16QAM minimum subnode and perform metric calculation | Select a 64QAM minimum subnode and perform metric calculation |
|---|---|---|

| Add an offset according to a QPSK probability | Add an offset according to a 16QAM probability | Add an offset according to a 64QAM probability |
|---|---|---|

Perform comparison and select a subnode whose metric is minimum

FIG. 6

| Select a QPSK minimum subnode and perform metric calculation | Select a 16QAM minimum subnode and perform metric calculation | Select a 64QAM minimum subnode and perform metric calculation |
|---|---|---|

Perform comparison and select a subnode whose metric is minimum

FIG. 7

30

31 Estimation unit — 32 Determining unit — 33 Calculation unit

FIG. 8

30

| | | | 32 | | | 33 |
|---|---|---|---|---|---|---|

Determining unit

| 34 | 35 | 31 | 321 | 322 | 33 |
|---|---|---|---|---|---|

Classification unit | Storing unit | Estimation unit | Calculation subunit | Determining subunit | Calculation unit

FIG. 9

40

| 41 | 43 | 42 |
|---|---|---|

Processor | Memory

FIG. 10

## INTERNATIONAL SEARCH REPORT

| International application No. |
|---|
| **PCT/CN2015/079677** |

### A. CLASSIFICATION OF SUBJECT MATTER

H04L 25/02 (2006.01) i

According to International Patent Classification (IPC) or to both national classification and IPC

### B. FIELDS SEARCHED

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CPRSABS; CNTXT; CNKI; VEN: receiv+, maximum w likelihood, ml, estimat+, calculat+, disturb+, interfer+, route, parameter?, reference, matrix, service, serving, cell

### C. DOCUMENTS CONSIDERED TO BE RELEVANT

| Category* | Citation of document, with indication, where appropriate, of the relevant passages | Relevant to claim No. |
|---|---|---|
| A | CN 101958852 A (ZTE CORP.), 26 January 2011 (26.01.2011), the whole document | 1-14 |
| A | US 7646830 B1 (WEILL, L.R.), 12 January 2010 (12.01.2010), the whole document | 1-14 |
| A | US 7356105 B1 (NATIONAL SEMICONDUCTOR CORPORATION), 08 April 2008 (08.04.2008), the whole document | 1-14 |
| A | CN 102870347 A (TELEFONAKTIEBOLAGET L M ERICSSON), 09 January 2013 (09.01.2013), the whole document | 1-14 |
| PX | CN 104079511 A (HUAWEI TECHNOLOGIES CO., LTD.), 01 October 2014 (01.10.2014), claims 1-14 | 1-14 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 June 2015 (30.06.2015) | **24 August 2015 (24.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YE, Jian** Telephone No.: (86-10) **62089548** |

Form PCT/ISA/210 (second sheet) (July 2009)

## INTERNATIONAL SEARCH REPORT
### Information on patent family members

| International application No. |
| --- |
| **PCT/CN2015/079677** |

| Patent Documents referred in the Report | Publication Date | Patent Family | Publication Date |
| --- | --- | --- | --- |
| CN 101958852 A | 26 January 2011 | CN 101958852 B | 21 August 2013 |
| US 7646830 B1 | 12 January 2010 | None | |
| US 7356105 B1 | 08 April 2008 | US 7116734 B1 | 03 October 2006 |
| CN 102870347 A | 09 January 2013 | US 2011243283 A1 | 06 October 2011 |
| | | US 8737496 B2 | 27 May 2014 |
| | | EP 2553832 A1 | 06 February 2013 |
| | | WO 2011121458 A1 | 06 October 2011 |
| CN 104079511 A | 01 October 2014 | None | |

Form PCT/ISA/210 (patent family annex) (July 2009)

**EP 3 145 138 A1**

## REFERENCES CITED IN THE DESCRIPTION

**Patent documents cited in the description**

- CN 201410269747